# EUROPEAN PATENT APPLICATION

(11) **EP 1 734 515 A1**
(43) Date of publication of application: **20.12.2006**
(21) Application number: 05721215.1
(22) Date of filing: 15.03.2005
(51) Int. Cl.: G11B 7/0065, G11B 7/135, G11B 7/24, G03H 1/02, G03H 1/26

(54) **HOLOGRAM RECORDING CARRIER AND RECORDING/REPRODUCTION METHOD AND DEVICE**

(30) Priority: 29.03.2004 JP 2004096499
(71) Applicant: Pioneer Corporation, Tokyo 153-8654 (JP)
(72) Inventor: OGASAWARA, Masakazu, Corporate R & D Laboratories,, Tsurugashima-shi, Saitama 3502288 (JP)
(74) Representative: Betten & Resch
(86) International application number: PCT/JP2005/005065
(87) International publication number: WO 2005/093725

(57) **Abstract**

A hologram record carrier has a substrate and a reflective layer, wherein recording or reproducing of information is performed by light irradiation. The hologram record carrier further comprises a holographic recording layer that reserves an optical interference pattern comprising components of coherent reference light and signal light as a diffractive grating therein, and a two-dimensional recording layer that is laminated in a film thickness direction of the holographic recording layer and whose physical property changes in response to light intensity.

## Description

### TECHNICAL FIELD

The present invention relates to a recording medium on which information or data recording is optically performed and/or from which information or data reproducing is optically performed, such as an optical disk or an optical card, and in particular to a hologram record carrier having a holographic recording layer that allows data recording and/or data reproducing through irradiation of a light beam thereon, and a record and reproducing method and a hologram apparatus.

### BACKGROUND ART

A hologram has drawn attention because of its ability to record two-dimensional data at a high density, for use in high density information recording. The hologram is characterized by volumetrically recording a wave front of light, which carries out recording of information on a recording medium made of a photosensitive material such as a photo-refractive material as changes in refractive index as a refraction grating. Multiplex recording on the holographic record carrier can dramatically increase the recording capacity. There are included angle multiplexing, phase coding multiplexing and the like in the multiplex recording in which information can be recorded multiple times by changing the incident angle or phase of interfering light waves even in a multiplexed hologram region.

On the other hand, an optical information recording apparatus that utilizes a hologram record carrier as a disk to record information at a high density has been developed (see JP-A-2003-85768). Since appropriate exposure time and energy are required in a relative static state between a recording medium and write light in order to record an interference fringe pattern of hologram, the conventional art provides a method for continuously exposing a recording position on a moving recording medium accurately.

In such a conventional hologram record carrier, an information recording region is provided between adjacent address-servo regions in a circumferential direction. Information for performing focus servo and tracking servo and address information to the information recording region are previously recorded in a form of emboss pits on the address-servo region. Information hologram record layers laminated on a transparent substrate are layers where holograms are recorded in a three-dimensional manner and it is formed from material whose optical characteristics, such as refractive index, dielectric constant, or reflectance change according to intensity of a laser beam irradiated, where an aluminum film is formed as a reflecting film.

### SUMMARY OF THE INVENTION

When a plurality of hologram recordings, for example, write once recordings, are performed, a unit bit amount of data written at one-time hologram recording step becomes large, so that control is complicated such that retrieval must be performed for each hologram in order to find a boundary of data-recorded portion.

It is therefore one of exemplary objects of the present invention to provide a hologram record carrier which can perform a plurality of hologram recordings rapidly and allows stable recording and reproducing, a recording and reproducing method, and a hologram apparatus as one example.

According to an aspect of the present invention, there is provided a hologram record carrier that has a substrate and a reflective layer, where recording and reproducing of information is performed according to light irradiation thereon,
characterized by comprising:
a holographic recording layer which reserves an optical interference pattern based upon components of coherent reference light and signal light as a diffractive grating therein; and
a two-dimensional recording layer which is laminated in a film thickness direction of the holographic recording layer and whose physical property changes in response to light intensity.

According to another aspect of the present invention, there is provided a hologram apparatus of a hologram record carrier which includes a substrate, a reflective layer, a holographic recording layer which reserves an optical interference pattern based upon components of coherent reference light and signal light as a diffractive grating therein; and a two-dimensional recording layer which is laminated in a film thickness direction of the holographic recording layer and whose physical property changes in response to light intensity, where recording or reproducing of information of a diffractive grating is performed according to light irradiation, characterized by comprising:
servo control which causes movement of the hologram record carrier to track a light beam is performed by condensing the light beam on the two-dimensional recording layer to detect return light of the focused light, and a mark is recorded or reproduced on the two-dimensional recording layer by the light beam.

According to still another aspect of the present invention, there is provided a recording method of a hologram record carrier which includes a substrate, a reflective layer, a holographic recording layer which reserves an optical interference pattern based upon components of coherent reference light and signal light as a diffractive grating therein; and a two-dimensional recording layer which is laminated in a film thickness direction of the holographic recording layer and whose physical property changes in response to light intensity, where recording of information is performed according to light irradiation, characterized by comprising:
servo control which causes movement of the hologram record carrier to track a light beam is performed by condensing the light beam on the two-dimensional recording layer to detect return light of the focused light, and a mark is recorded on the two-dimensional recording layer by the light beam.

According to another aspect of the present invention, there is provided a reproducing method of a hologram record carrier which includes a substrate, a reflective layer, a holographic recording layer which reserves an optical interference pattern based upon components of coherent reference light and signal light as a diffractive grating therein; and a two-dimensional recording layer which is laminated in a film thickness direction of the holographic recording layer and whose physical property changes in response to light intensity, where a mark has been recorded on the two-dimensional recording layer according to light irradiation, characterized by comprising:
servo control which causes movement of the hologram record carrier to track a light beam is performed by condensing the light beam on the two-dimensional recording layer to detect return light of the focused light, and information from the mark on the two-dimensional recording layer is reproduced by the light beam.

### BRIEF DESCRIPTION OF THE DRAWINGS

Fig. 1 is a schematic partial sectional view showing a hologram record carrier of an embodiment according to the present invention.
Fig. 2 is a schematic partial perspective view showing the hologram record carrier of the embodiment according to the present invention.
Fig. 3 is a block diagram showing a schematic configuration of a hologram apparatus that performs recording or reproducing of information on the hologram record carrier of the embodiment of the present invention.
Fig. 4 is a schematic perspective view showing an outline of a pickup of the hologram apparatus that records and reproduces information of the hologram record carrier of the embodiment according to the present invention.
Fig. 5 is a configuration diagram showing an outline of the a pickup of the hologram apparatus that records and reproduces information of the hologram record carrier of the embodiment according to the present invention.
Fig. 6 is a schematic perspective view showing a three-axis actuator for an objective lens in the pickup of the hologram apparatus which records and reproduces of information on the hologram record carrier of the embodiment according to the present invention.
Fig. 7 and Fig. 8 are configuration diagrams showing an outline of the pickup of the hologram apparatus that records and reproduces information of the hologram record carrier of the embodiment according to the present invention.
Fig. 9 is a plan view showing one portion of a light detector in the pickup of the hologram apparatus that records and reproduces information of the hologram record carrier of the embodiment according to the present invention.
Fig. 10 is a plan view each showing tracks of the hologram record carrier of the embodiment according to the present invention.
Fig. 11 to Fig. 19 are plan views each showing tracks of a hologram record carrier of another embodiment according to the present invention.
Fig. 20 and Fig. 21 are schematic partial sectional views each showing a hologram record carrier of another embodiment according to the present invention.
Fig. 22 is a perspective view showing a hologram record carrier of an embodiment according to the present invention.
Fig. 23 is a perspective view showing a hologram optical card of another embodiment according to the present invention.

### MODE FOR CARRYING OUT THE INVENTION

In the following, embodiments of the present invention will be described with reference to the drawings.

### <Holograplnic Record Carrier>

In a hologram apparatus, holographic recording is performed by using a first light beam causing a reference light and a signal light interfering with each other, and at the same time using a servo beam of laser light with a different wavelength from the first light beam to carry out a servo control (focusing and tracking) on relative positioning of a holographic record carrier and a pickup device particularly an object lens thereof. The following description is an example of such device.

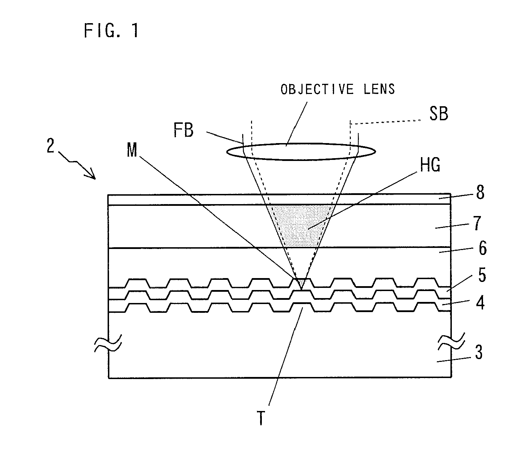

Fig. 1 shows a holographic record carrier 2 of disk-shaped, an exemplary embodiment of the present invention, on which information recording or reproduction is preformed with light irradiation.

The holographic record carrier 2 comprises a substrate 3 with transferred tracks, a reflective layer 4, a two-dimensional recording layer 5, an separation layer 6, a holographic recording layer 7, and a protective layer 8 which are laminated on the substrate 3 from an opposite side to a side from which reference light impinges.

The hologram record carrier 2 includes the holographic recording layer 7 that reserves an optical interference pattern based upon a first light beam FB including components of coherent reference light and signal light as a diffractive grating therein, and the two-dimensional recording layer 5 laminated in a film thickness direction of the holographic recording layer 7. When the first light beam FB is used for reproducing, it does not include component of the signal light. When the first light beam FB is used for reproducing of phase-codingmultiplex, it does not include component of the signal light but includes only a phase-modulating pattern and component of reference light.

The two-dimensional recording layer 5 is made from a second photo-sensitive material whose physical property changes reversibly or non-reversibly in response to intensity of a servo beam SB (a second light beam). The two-dimensional recording layer 5 is a phase-change film, a pigmented coat, or a magneto-optical recording film where sensitivity to a wavelength of the servo beam SB is set to be higher than that to a wavelength of the first beam FB. The two-dimensional recording layer 5 is selected from material that allows mark recording depending on light intensity of the servo beam SB.

The holographic recording layer 7 has a sensitivity to a wavelength of the first light beam FB higher than that to a wavelength of the servo beam SB. Photo-refractive material, hall burning material, photo-chromic material, or the like is used as first photo-sensitive material composing the holographic recording layer 7 reserving an optical interference pattern such that information can be recorded or reproduced according to an interference pattern of light passing through the holographic recording layer 7.

Material for the substrate 3 is not limited to a specific material, but the substrate 3 is made of, for example, glass, plastic material such as polycarbonate, amorphous polyolefin, polyimide, PET, PEN, or PES, ultraviolet curable acrylic resin or the like is used as the material. Grooves are formed on a main face of the substrate 3 as a plurality of tracks T extending such that they separate from each other without crossing one another. The reflective layer 4 is made from, for example, such metal as aluminum or a dielectric multi-layer film. The reflective layer 4 also functions as a guide layer. The separation layer 6 and the protective layer 8 are made of optically-transparent material, and they serve for functions such as planalization of the laminated structure or protection of the holographic recording layer.

The tracks T are provided for performing servo-control of at least controlling tracking servo on an objective lens for light beam irradiation. The hologram HG is recorded three-dimensionally in an upper portion of the holographic recording layer 7 between one track T and another track T. For conducting a tracking servo control on the disk-shaped substrate 3, the tracks T may be formed on the substrate 3 spirally, concentrically, or in a spiral arc shape composed of a plurality of divided arcs on the center of the substrate in order to control tracking servo.

An optical interference pattern obtained by a coherent first light beam is reserved as hologram HG (refractive grating) in the inner side of the holographic recording layer in a volume manner, and at least one mark M is two-dimensionally recorded on the two-dimensional recording layer laminated in a film thickness direction of the holographic recording layer by a servo beam SB irradiated approximately coaxially with the first light beam. That is, information can be recorded on the two-dimensional recording layer 5 by the servo beam SB in a method other than the method causing the objective lens to track movement of the hologram record carrier 2. The mark M is recorded on a corresponding portion of the two-dimensional recording layer laminated on a hologram or a portion of a hologram group recorded in the holographic recording layer. The servo beam SB is used for mark recording and is further focused on the two-dimensional recording layer to be used as the servo beam SB for servo control of focus of at least the second light beam of the first and second light beams to the hologram record carrier 2 or tracking. The mark M may include an terminal end mark indicating a terminal end of a hologram or a hologram group to be recorded in the holographic recording layer, address marks indicating their addresses, and relational marks indicating various information items relating to these marks (thumbnail information of content information, compression process information, information about laser power or recording wavelength during hologram recording).

The servo control is conducted by driving an objective lens by an actuator in accordance with a detected signal, using a pickup which includes a light source for emitting a light beam, an optical system including an objective lens for converging the light beam on the reflective layer 4 as a light spot and leading its reflected light to a photodetector, and the like. The diameter of the light spot is set to be narrowed down to a value determined by the wavelength of the light beam and the numerical aperture (NA) of the objective lens (a so-called diffraction limit which is, for example, 0.82 λ/NA (λ = wavelength), but is determined only by the wavelength of light and the numerical aperture when aberration is sufficiently small as compared with the wavelength). In other words, the light beam radiated from the objective lens is used such that it is focused when the reflective layer lies at the position of its beam waist. The width of the grooves is determined as appropriate in accordance with an output of the photodetector which receives the reflected light from the light spot such as a push-pull signal.

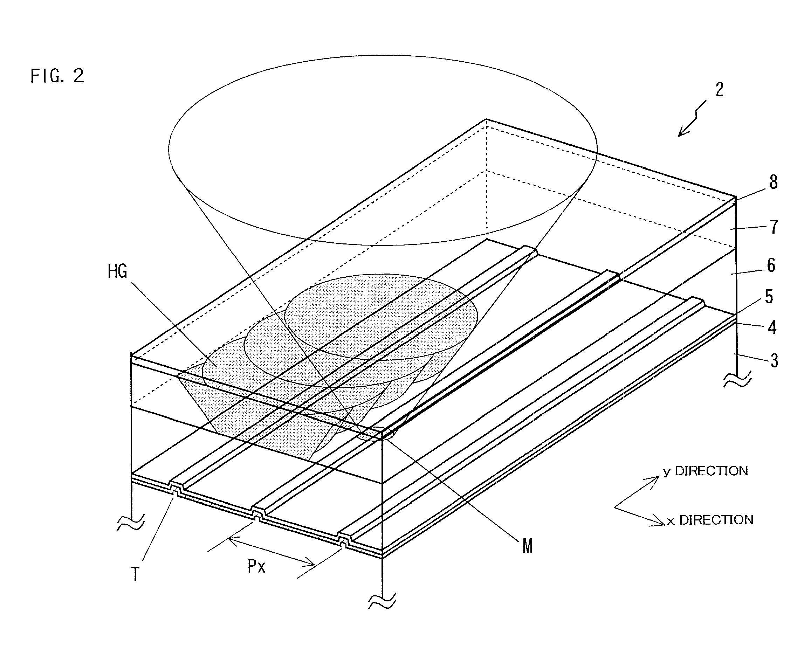

As shown in Fig. 2, a pitch Px (x direction, namely, a direction perpendicular to an extending direction (y direction) of the track T) of the track T of the reflective layer 4 is set as a predetermined distance determined depending on the multiplicity of holograms HG recorded in an upper portion of a spot of the first light beam FB. A value (the number of times) indicating the maximum multiplicity in an actual shift multiple recording system hologram system, namely, the maximum number of independent holograms that can be recorded in the same volume in the recording medium is determined according to the kind of the medium or the apparatus configuration, as described above. The minimum track pitch Px (namely, the minimum shift distance) is set as a value obtained by dividing a length of the hologram region in which recording is performed by the maximum multiplicity. The track pitch Px is set to be equal to or longer than the minimum shift distance.

In the foregoing embodiment, the hologram record carrier having the structure where the reflective layer 4 and the holographic recording layer 7 are laminated via the separation layer has been explained, but the separation layer may be removed. The reflective layer 4 is laminated so as to be positioned between the holographic recording layer 7 laminated and the substrate 3, but the substrate 3 may be disposed between the holographic recording layer 7 and the reflective layer 4 such that the it functions as a separation layer.

### <Hologram Apparatus>

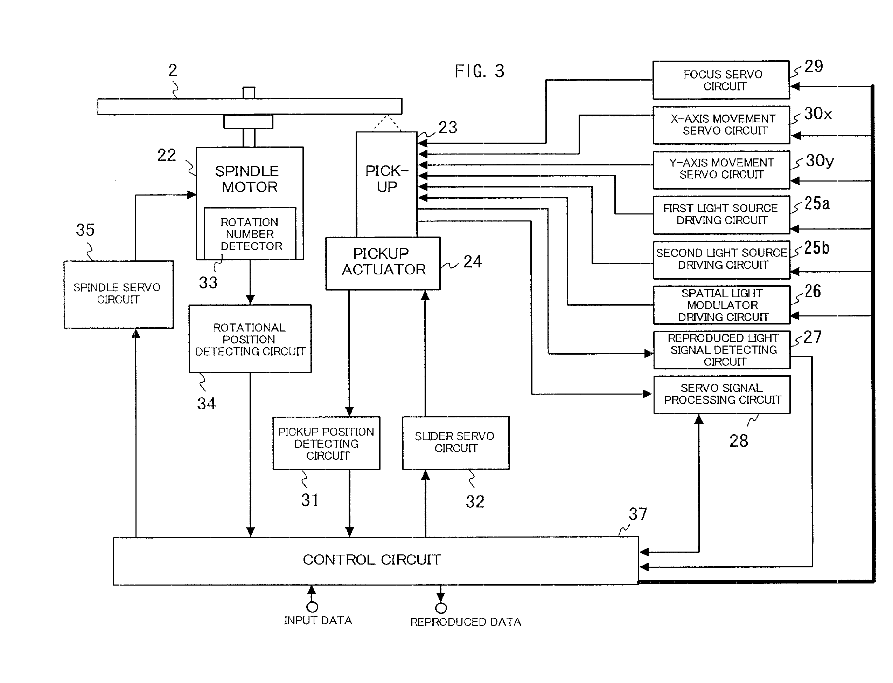

Fig. 3 generally shows an exemplary configuration of a hologram apparatus for recording or reproducing information to or from a holographic record carrier to which the present invention has been applied.

The hologram apparatus of Fig. 3 comprises a spindle motor 22 for rotating a disk 2, which is a holographic record carrier, through a turn table; a pickup device 23 for reading a signal from the holographic record carrier 2 with a light beam; a pickup actuator 24 for holding and moving the pickup in a radial direction (x-direction) ; a first laser source driving circuit 25a; a second laser source driving circuit 25b; a spatial light modulator driving circuit 26; a reproduced signal processing circuit 27; a servo signal processing circuit 28; a focusing servo circuit 29; an x-direction movement servo circuit 30x; a y-direction movement servo circuit 30y; a pickup position detecting circuit 31 connected to the pickup actuator 24 for detecting a pickup position signal; a slider servo circuit 32 connected to the pickup actuator 24 for supplying a predetermined signal to the pickup actuator 24; a rotation encoder 33 connected to the spindle motor 22 for detecting a rotational speed signal of the spindle motor; a rotation detector 34 connected to the rotation encoder 33 for generating a rotating position signal of the holographic record carrier 2; and a spindle servo circuit 35 connected to the spindle motor 22 for supplying a predetermined signal to the spindle motor 22.

The hologram apparatus comprises a controller circuit 37 which is connected to first laser source driving circuit 25a, second laser source driving circuit 25b, spatial light modulator driving circuit 26, reproduced signal processing circuit 27, servo signal processing circuit 28, focusing servo circuit 29, x-direction movement servo circuit 30x, y-direction movement servo circuit 30y, pickup position detecting circuit 31, slider servo circuit 32, rotation encoder 33, a rotation detector 34, and spindle servo circuit 35. The controller circuit 37 conducts a focusing servo control, an x- and y-direction movement servo control, are produced position (position in the x- andy-direction) control, and the like related to the pickup through the foregoing circuits connected thereto based on signals from these circuits. The controller circuit 37, which is based on a microcomputer that is equipped with a variety of memories for controlling the overall apparatus, generates a variety of control signals in accordance with manipulation inputs from the user from an operation unit (not shown) and a current operating condition of the apparatus, and is connected to a display unit (not shown) for displaying an operating situation and the like for the user. The controller circuit 37 is also responsible for processing such as encoding of data to be recorded, input from the outside, and the like, and supplies a predetermined signal to the spatial light modulator driving circuit 26 for controlling the recording sequence. Furthermore, the controller circuit 37 performs demodulation and error correction processing based on signals from the reproduced signal processing circuit 27 to restore data recorded on the holographic record carrier. In addition, the controller circuit 37 decodes restored data to reproduce information data which is output as reproduced information data.

Furthermore, the controller circuit 37 performs processings such as coding of data relating to hologram data such as thumbnail data of content information (for example, image data) obtained from hologram data to be recorded, a compression process at a hologram recording time, a coding/ decoding process, laser power, a recording wavelength, or the like and supplies the obtained signal to the second light source drive circuit 25b to control mark recording. The controller circuit 37 reproduces data recorded on the two-dimensional recording layer of the hologram record carrier to output the same based upon a signal supplied from the servo signal processing circuit 28.

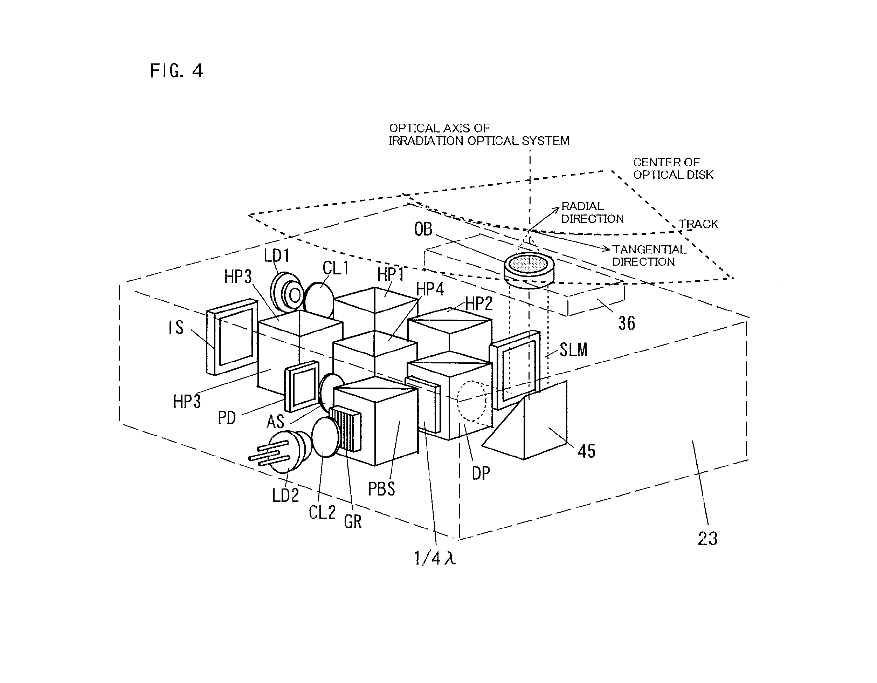

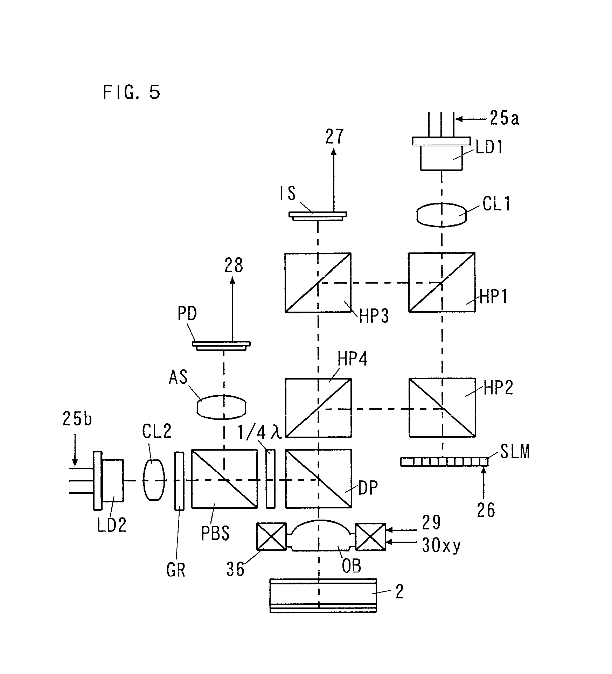

Figs. 4 and 5 generally show the configuration of the pickup of the recording/reproducing apparatus. The pickup device 23 generally comprises a recording/reproducing optical system, a servo system, and a common system thereto. These systems are placed substantially on the common plane except for the objective lens OB.

The recording/reproducing optical system comprises a first laser source LD1 for recording and reproducing holograms, a first collimator lens CL1, a first half mirror prism HP1, a second half mirror prism HP2, a polarizing spatial light modulator SLM, a reproduced signal detecting unit including an image sensor IS comprised of an array such as a CCD, a complimentary metal oxide semiconductor device, or the like, a third half mirror prism HP3, and a fourth half mirror prism HP4.

The servo system comprises an objective lens actuator 36 for servo-controlling (movements in the x-, y-, z-directions) of the position of a light beam with respect to the holographic record carrier 2, a second laser source LD2, a second collimator lens CL2, a diffraction optical element GR such as a grating or the like for generating a multi-beam for a servo light beam, a polarization beam splitter PBS, a quarter wavelength plate 1/4 λ, a coupling lens AS, and a servo signal detecting unit including a photodetector PD. The servo system is used for recording and reproducing mark record to and from the two-dimensional recording layer 5.

A dichroic prism DP and the objective lens OB are included in the common system.

As shown in Figs. 4 and 5, half mirror surfaces of the first, third and fourth half mirror prisms HP1, HP3, and HP4 are disposed to be parallel with one another. In a normal direction of these half mirror planes, the half mirror plane and the separation planes of the second half mirror prism HP2 and the dichroic prism DP and polarization beam splitter PBS are in parallel with one another. These optical parts are disposed such that the optical axes (one-dot chain lines) of light beams from the first and second laser sources LD1 and LD2 extend to the recording and reproducing optical system and servo system, respectively, and substantially coincide with one another in the common system.

The first laser light source LD1 is connected to the first light source drive circuit 25a, and an output thereof is adjusted by the drive circuit 25a such that intensity of a first light beam FB to be emitted is made strong at a hologram recording time, while it is made weak at a reproducing time.

The second laser light source LD2 is connected to the second light source drive circuit 25b, and an output thereof is adjusted by the drive circuit 25b such that intensity of a servo beam SB with a wavelength different from that of an output from the first laser light source is made strong at a mark recording time, while it is made weak at a reproducing time.

The polarizing spatial light modulator SLM of reflection type has a function of electrically transmitting or blocking a part or all of incident light with a liquid crystal panel or the like having a plurality of pixel electrodes that are divided in a matrix shape or the like. The polarizing spatial light modulator SLM, which is connected to the first laser source driving circuit 25a, modulates and reflects an light beam so as to have a polarization component distribution based on page data to be recorded (two-dimensional data of information pattern such as bright and dark dot pattern or the like on a plane) from the spatial light modulator driving circuit 26 to generate signal light. Further, instead of the polarizing spatial light modulator SLM, in case that a transparent liquid crystal panel having a plurality of pixel electrodes divided into a matrix is used as the spatial light modulator, the modulator is arranged between the first and second half mirror prisms HP1 and HP2.

The reproduced signal detecting unit including the image sensor IS is connected to the reproduced signal processing circuit 27.

Further, the pickup device 23 is provided with the objective lens actuator 36 for moving the objective lens OB in the optical axis (z direction) parallel direction, and in a track (y direction) parallel direction, and in a radial (x direction) direction perpendicular to the track.

The photodetector PD of the servo signal detecting unit is connected to the servo signal processing circuit 28, and has the shape of light receiving element divided for focusing servo and x and y direction movement servo generally used for optical disks. The servo scheme is not limited to an astigmatism method, but can employ a push-pull method. The output signal of the photodetector PD, such as a focus error signal and a tracking error signal etc. is supplied to the servo signal processing circuit 28.

In the servo signal processing circuit 28, a focusing driving signal is generated from the focus error signal, and is supplied to the focusing servo circuit 29 through the controller circuit 37. The focusing servo circuit 29 drives the focusing section of the objective lens actuator 36 mounted in the pickup device 23, so that the focusing section operates to adjust the focus position of an optical spot irradiated to the holographic record carrier.

Further, in the servo signal processing circuit 28, x and y direction movement driving signals are generated from x and y direction movement error signals, and supplied to the x-direction movement servo circuit 30x and y-direction movement servo circuit 30y, respectively. Thus the x-direction movement servo circuit 20x and the y-direction movement servo circuit 30y drive the objective lens actuator 36 mounted on the pickup 23 according to the x- and y-direction movement driving signals. Therefore, the objective lens is driven by the amount of driving current according to the driving signal along the x, y and z axes, and then the position of the focal point incident on the holographic record carrier is displaced. Accordingly, it is possible to fix a relative position of the focal point with respect to a moving holographic record carrier and then to guarantee time to form the hologram when recording data.

The controller circuit 37 generates a slider driving signal based on a position signal from the operation panel or the pickup position detecting circuit 31 and the x direction movement (tracking) error signal from the servo signal processing circuit 28, and supplies the slider driving signal to the slider servo circuit 32. The slider servo circuit 32 moves the pickup device 23 in the radial direction of the disk in response to a driving current carried with the slider driving signal by the pickup actuator 24.

The rotation encoder 33 detects a frequency signal indicative of a current rotating frequency of the spindle motor 22 for rotating the holographic record carrier 2 through the turn table, generates a rotational speed signal indicative of the spindle rotational signal corresponding thereto, and supplies the rotational speed signal to the rotation detector 34. The rotation detector 34 generates a rotational speed position signal which is supplied to the controller circuit 37. The controller circuit 37 generates a spindle driving signal which is supplied to the spindle servo circuit 35 to control the spindle motor 22 for driving the holographic record carrier 2 to rotate.

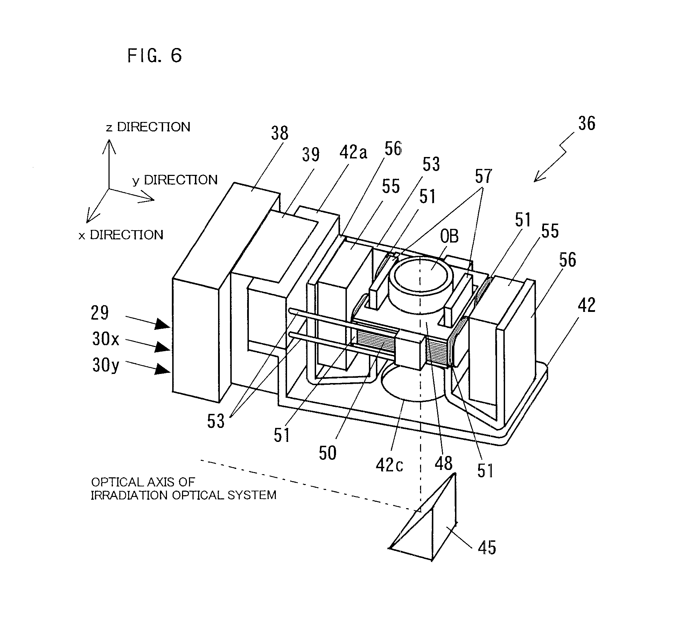

Fig. 6 shows the objective lens actuator 36 of the pickup for the hologram apparatus of this embodiment.

The objective lens actuator 36 comprises an actuator base 42 which can swing in the y-direction by a piezo element 39 which is coupled to a support 38 secured to a pickup body (not shown). Within the pickup body, there are the aforementioned optical parts required for making up the pickup such as the prism 45 for reflecting a light beam from the laser at right angles for leading the light beam to the objective lens OB, and the like. The light beam passes through an opening 42c and the objective lens OB, and is converged to spot light which is irradiated to an information recording surface of the medium on the turn table.

As shown in Fig. 6, the objective lens OB is mounted on a protrusion at an upper end of a lens holder 48 which is formed in a cylindrical shape, and makes up a movable optical system together with the objective lens. A focusing coil 50 is wound around the outer periphery of the lens holder 48 such that the central axis of the coil is in parallel with the optical axis of the objective lens OB. Four tracking coils 51, for example, are disposed outside of the focusing coil 50 such that the central axes of the coils are perpendicular to the optical axis of the objective lens OB. Each tracking coil 51 is previously wound in a ring shape, and adhered on the focusing coil 50. The movable optical system made up of the objective lens OB and lens holder 48 is supported at one end of two pairs, i.e., a total of four longitudinal supporting members 53 which are spaced apart from each other in the optical axis direction of the objective lens OB and extend in the y-direction perpendicular to the optical axis direction. However, Fig. 6 shows only three of the supporting member 53. Each supporting member 53 is cantilevered at a distal end of an extension 42a secured to the actuator base 42. Each supporting member 53 is made of a coil material or the like, and therefore has a resiliency. The movable optical system made up of the objective lens OB and lens holder 48 is movable in the x-, y-, and z-directions by the four longitudinal supporting members 53 and aforementioned piezo element 39.

The lens holder 48 is spaced apart from and sandwiched between a pair of magnetic circuits. Each magnetic circuit comprises a magnet 55 facing the lens holder 48, and a metal plate 56 for supporting the magnet 55, and is secured on the actuator base 42. The lens holder 48 is formed with a pair of through-holes which are positioned to sandwich the objective lens OB in parallel with the optical axis of the objective lens OB and the central axis of the coil inside the focusing coil 50 of the lens holder 48 in a direction in which the longitudinal supporting members 53 extend. A yoke 57, which extends from the metal plate 56 of the magnetic circuit, is inserted into each through-hole without a contact therebetween. The focusing coil 50 and tracking coil 51 are positioned within a magnetic gap of the magnetic circuit which is made up of the magnet 55 and yoke 57.

The focusing coil 50, tracking coil 51, and piezo element 39 are controlled by the focusing servo circuit 29, x-direction movement servo circuit 30x, andy-direction movement servo circuit 30y, respectively. Since parallel magnetic flux crossing perpendicularly to the respective coils can be generated in the magnetic gap, driving forces in the x- and z-directions can be generated by supplying predetermined currents to the respective coils to drive the aforementioned movable optical system in the respective directions.

In this way, voice coil motors are used to drive the objective lens OB in the x- and y-directions, and the objective lens OB is driven for the y-direction together with the actuator base using a piezo element or the like. Other than the foregoing structure, the actuator may use voice coil motors for all the axes.

Description will be made on a recording and reproducing method for recording or reproducing information by irradiating a holographic record carrier with an light beam using the holographic recording and reproducing apparatus described above.

### <Holographic Recording>

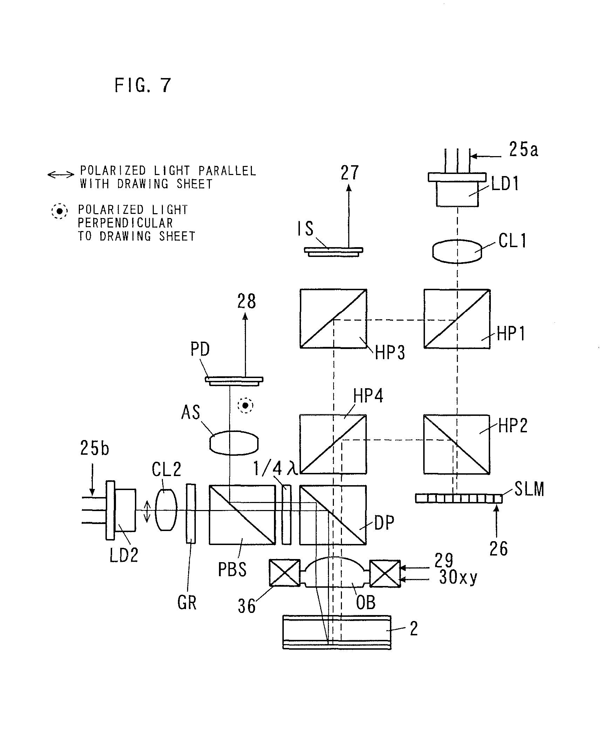

During recording, as shown in Fig. 7, coherent light having a predetermined intensity from the first laser source LD1 is separated into a reference beam and a signal beam by the first half mirror HP1 (both the beams are indicated by broken lines and are shifted from the optical axis of Fig. 5 for explaining the optical path).

The signal beam transmits the second half mirror prism HP2 , and impinges on the polarizing spatial light modulator SLM along the normal of the reflective surface. The signal light modulated in a predetermined manner by and reflected from the polarizing spatial light modulator SLM again impinges on the second half mirror prism HP2 and directs to the fourth half mirror prism HP4.

The reference beam is reflected by the third half mirror prism HP3, and directs to the fourth half mirror prism HP4.

The reference light and the signal light are combined so as to be substantially coaxial by using the fourth half mirror prism HP4. The two combined light beams pass through the dichroic prism DP, and are converged on the holographic record carrier 2 by the objective lens OB for recording a hologram.

### <Holographic reproducing>

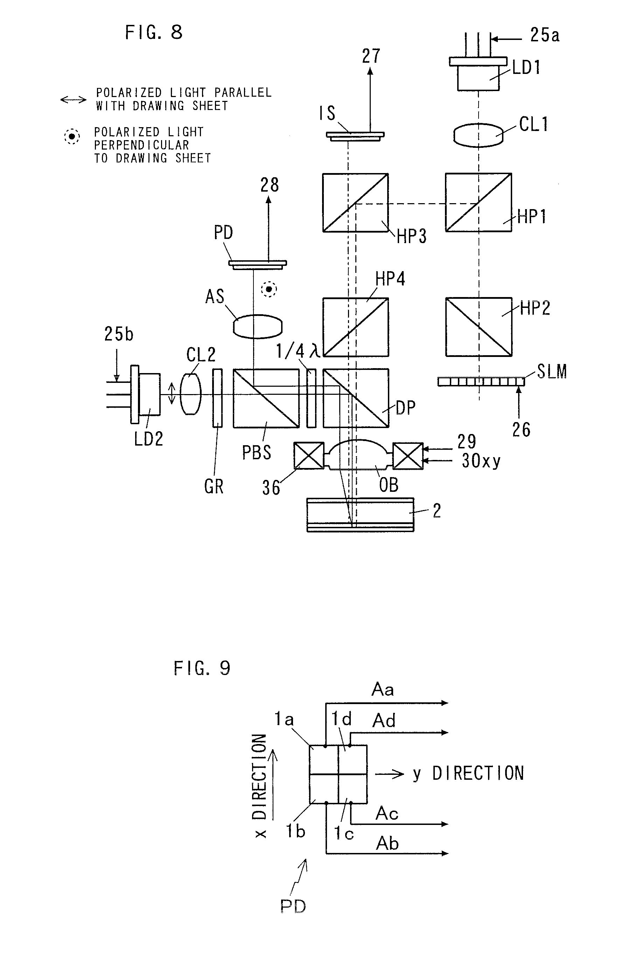

During information reproduction, on the other hand, light is separated into a reference beam and a signal beam by the first half mirror HP1, in a manner similar to the recording, as shown in Fig. 8, however, holograms are reproduced only with the reference beam. By bringing the polarizing spatial light modulator SLM into a non-reflective state (light-permissible state), only reference light from the third half mirror HP3 passes through the dichroic prism DP and objective lens OB, and impinges on the holographic record carrier 2.

Since reproduced light (two-dot chain line) generated from the holographic record carrier 2 transmits the objective lens OB, dichroic prism DP, fourth half mirror prism HP4, and third half mirror prism HP3, and impinges on the image sensor IS. The image sensor IS delivers an output corresponding to an image formed by the reproduced light to the reproduced signal processing circuit 27 which generates a reproduced signal that is supplied to the controller circuit 50 for reproducing recorded page data. In addition, an image forming lens may be provided between the third half mirror prism HP3 and the image sensor IS.

### <Servo Control>

Here, a position decision servo control is performed with respect to the holographic record carrier or hologram disk 2 in both recording and reproduction of the hologram. According to the position decision servo control, three axes actuator (objective lens actuator 36) is capable of driving the objective lens along the x, y, and z-directions, by an error signal operated and obtained based the output of the photodetector PD.

The second laser source LD2 for servo control emits coherent light at a different wavelength from the first laser source LD1, as shown in Figs. 7 and 8. The servo light beam (thin solid line) from the second laser source LD2 is P-polarized light (double-head arrow indicating the parallelism to the drawing sheet) which is led along an optical path for servo detection including the second collimator lens CL2, polarization beam splitter PBS and 1/4 wave plate 1/4λ, but is combined with the signal beam and reference beam by the dichroic prism DP immediately before the objective lens OB. The servo light beam, after reflected by the dichroic prism DP, is converged by the objective lens OB, and impinges on the holographic record carrier 2. Return light of the servo light beam reflected from the holographic record carrier 2 back to the objective lens OB and then transformed by the 1/4 wave plate 1/4 λ into S-polarized light (a black circle surrounded by a broken-line circle indicative of being perpendicular to the drawing sheet) which impinges on a light receiving surface of the servo photodetector PD along the normal thereof through the polarization beam splitter PBS and astigmatism element AS.

Further, the z-direction servo (focusing servo) control along the z-direction may be performed by the astigmatic method, three-beam method, spot size method and push/pull method that are used in a conventional light pickup or a combination thereof may be used.

With the astigmatism method, for example, a central portion of the photodetector PD comprises light receiving elements 1a - 1d having a light receiving surface equally divided into four for receiving a beam, for example, as shown in Fig. 9. The directions in which the photodetector PD is divided correspond to the radial direction of the disk and a tangential direction of the guide tracks. The photodetector PD is set such that a focused light spot appears to be a circle centered at the intersection of lines which divide the photodetector PD into the light receiving elements 1a - 1d.

In accordance with output signals of the respective light receiving elements 1a - 1d of the photodetector PD, the servo signal processing circuit 28 generates an RF signal Rf and a focus error signal. When the signals of the light receiving elements 1a - 1d are labeled Aa - Ad, respectively, in this order, the focus error signal FE is calculated by EF = (Aa+Ac) - (Ab+Ad), and the tracking error signal TE is calculated by TE = (Aa+Ad) - (Ab+Ac). These error signals are supplied to the controller circuit 37.

### <Mark Recording and Reproducing>

In the present embodiment, as shown in Fig. 2, the servo beam SB is focused on the two-dimensional recording layer 5 of the hologram record carrier 2 and it records information on the two-dimensional recording layer 5 as a mark M according to light power modulation in the same manner as the conventional optical disk. In addition, positioning servo control with the hologram record carrier 2 is always performed by the servo beam SB, and hologram reproducing is simultaneously performed by the first light beam FB. The kind of information to be recorded and another carrier structure will be shown below.

### (1) Mark for hologram rewrite

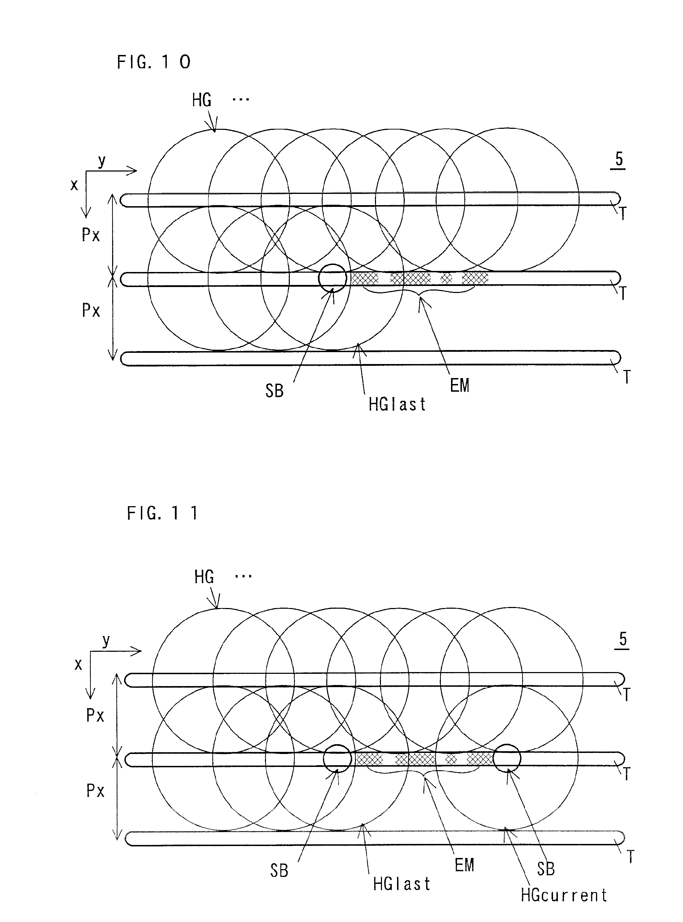

As shown in Fig. 10, an end mark EM indicating hologram recording termination is recorded on the same track rear the position on the two-dimensional recording layer 5 corresponding to a last hologram (HG last) of holograms recorded this time. Next, when a hologram is rewritten, as shown in Fig. 11, a rewrite portion (the last hologram) can be determined without reproducing the holograms for retrieving the rewrite portion by detecting the end mark EM by a servo beam SB for the next recording, and hologram recording is started from the end mark EM. In this case, a phase-change film, a pigmented coat, or a magneto-optical recording film can be used as the two-dimensional recording layer 5.

### (2) Mark for hologram rewrite of mark rewritable type

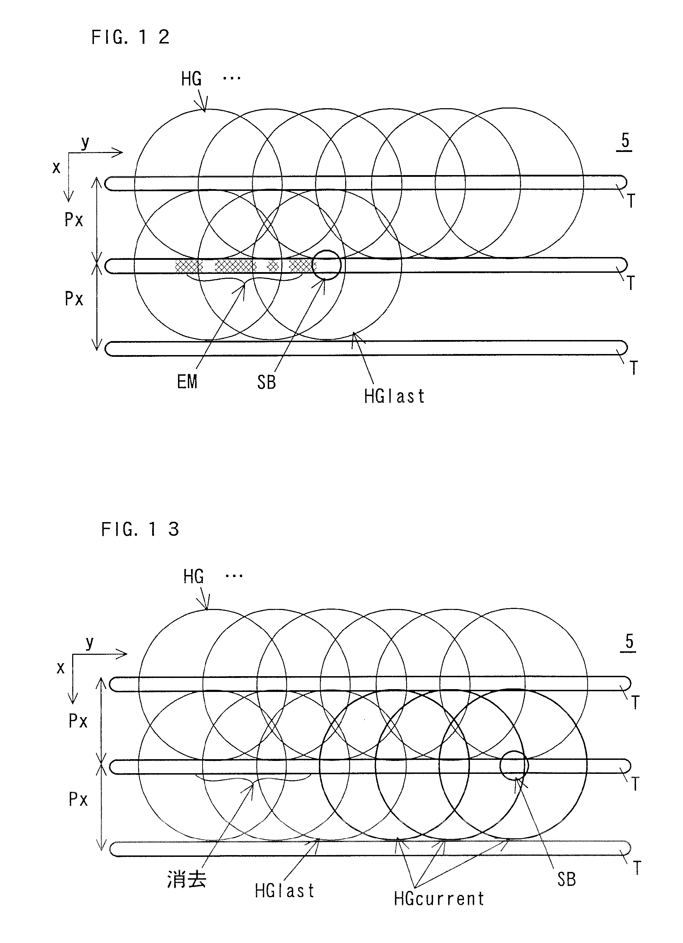

As shown in Fig. 12, an end mark EM indicating hologram recording termination is recorded on the same track ahead of the position on the two-dimensional recording layer 5 corresponding to a last hologram (HG last) of holograms recorded this time by a predetermined distance. Next, when a hologram is rewritten, as shown in Fig. 13, the end mark EM is detected by a servo beam SB for the next recording, the detected end mark EM is erased, and hologram recording is started from the erased position. Here, a rewrite portion (the last hologram) can be determined without reproducing the holograms for retrieving the rewrite portion, hologram recording is started following the end mark EM, and an end mark for rewrite be newly recorded at a time of recording end like the embodiment. In this case, a phase-change film whose physical change can occur reversibly or a magneto-optical recording film can be used as the two-dimensional recording layer 5.

### (3) Self-address Information Mark

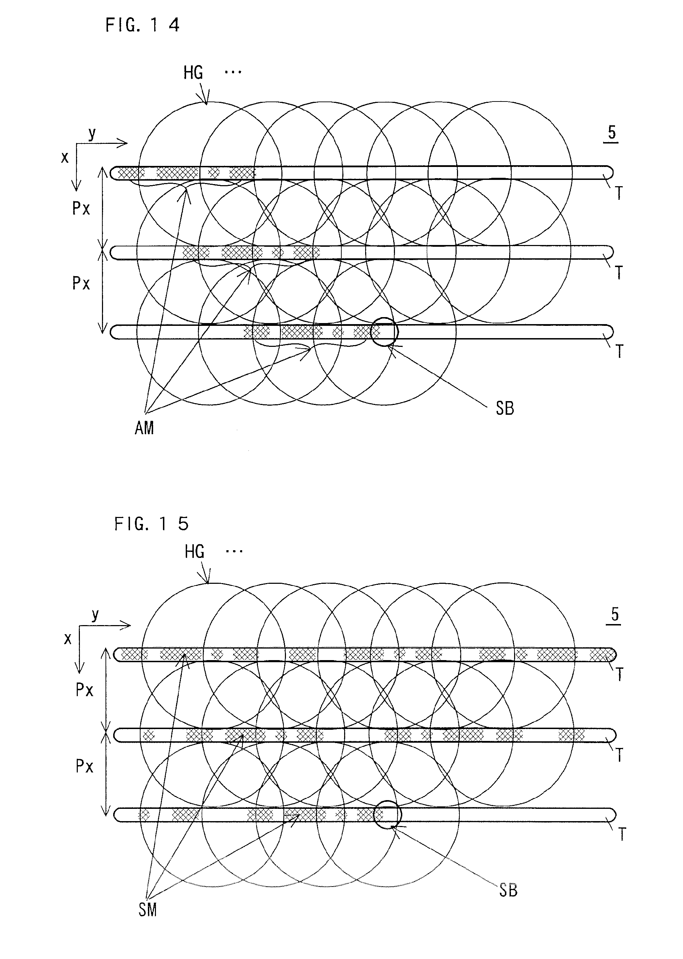

As shown in Fig. 14, regarding a hologram or a hologram group, simultaneously with recording of a hologram, an address mark AM corresponding to the hologram is recorded on a track T (under a hologram stack) of the two-dimensional recording layer 5 by a servo beam SB at a predetermined timing (interval). Address search for a hologram or a hologram group can be made possible by reproducing information of the address mark AM using the servo beam SB at the reproducing time.

### (4) Self-address Information Mark

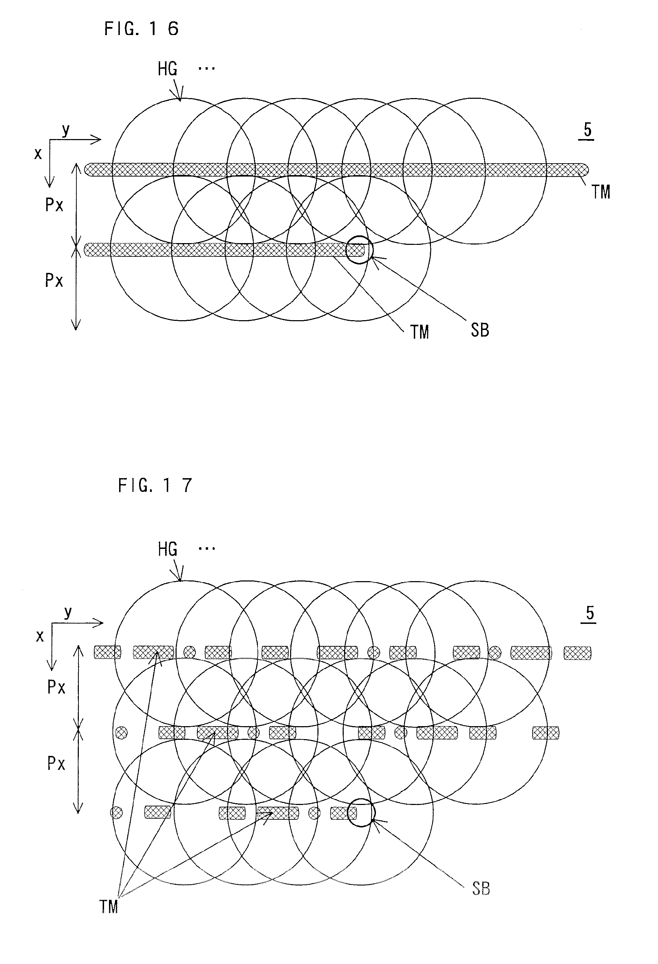

As shown in Fig. 15, a relational mark SM indicating thumbnail information of highly compressed image data recorded on a hologram or information about laser power at a hologram recording time or a recording wavelength, or the like is simultaneously recorded over the track T (under the hologram stack) of the two-dimensional recording layer 5 by a servo beam SB.

### (5) Simultaneous Track Recording

As shown in Fig. 16, the track mark TM is recorded on the two-dimensional recording layer 5 by a servo beam SB simultaneously with hologram recording.

Especially, a track serving as a guide can be formed on a hologram record carrier that does not include any track by a servo beam SB at the hologram recording time.

### (6) Simultaneous Track Recording

As shown in Fig. 17, a relational track mark STM indicating thumbnail information of highly compressed image data recorded on a hologram or information about laser power at a hologram recording time or a recording wavelength, or the like is recorded on the two-dimensional recording layer 5 by a servo beam SB simultaneously with hologram recording.

Especially, various information items can be recorded on a hologram record carrier that does not include any track besides data for tracking.

### (7) Inter-track Hologram Recording

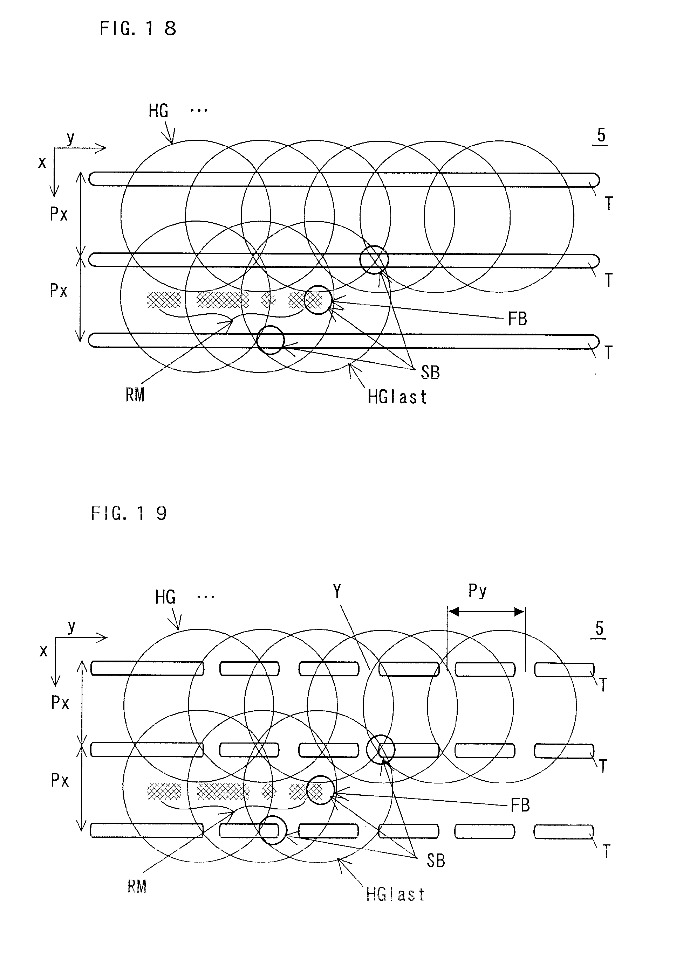

As shown in Fig. 18, a servo beam SB is converted to multiple beams, for example, three beams by a diffractive optics such as a grating in the pickup so that tracking servo control is performed by side beams and recording is performed by a central main beam. A mark RM is recorded between adjacent tracks at a position on the two-dimensional recording layer 5 corresponding to the last hologram (HGlast) of holograms recorded at this time. That is, the optical axis of the first light beam FB for recording is disposed such that the first light beam FB for recording is positioned at the center of a light spot of three servo beams SB arranged in series, so that tracking servo control is performed and hologram recording is performed on the holographic recording layer 7 above a mirror face portion between adjacent tracks.

### (8) Inter-track Hologram Recording

As shown in Fig. 19, a servo beam SB is converted to three beams by a grating, so that XY servo is performed by two side beams and recording is performed by a main beam. That is, the optical axis of the first light beam FB for recording is disposed such that the first light beam FB for recording is positioned at the center of a light spot of three servo beams SB arranged in series, so that tracking servo control is performed and hologram recording is performed on the holographic recording layer 7 above a mirror face portion between adjacent tracks.

Y-direction positioning marks Y (lacked portions) in the embodiment are disposed such that the respective marks are spaced at a mark pitch Py (a second pitch) in an extending direction of the track T and the mark pitch Py constitutes a function of the track pitch Px.

For example, the mark pitch Py of the y-direction positioning marks Y on the same track is set to be approximately integral multiple of the track pitch Px. A light spot can be moved accurately between adjacent tracks to be recorded owing to the track structure of the hologram record carrier. In the embodiment, accurate multiple recording can be achieved by providing the y-direction positioning mark Y used for y-direction positioning on the track structure.

### (9) Another Hologram Record carrier Structure

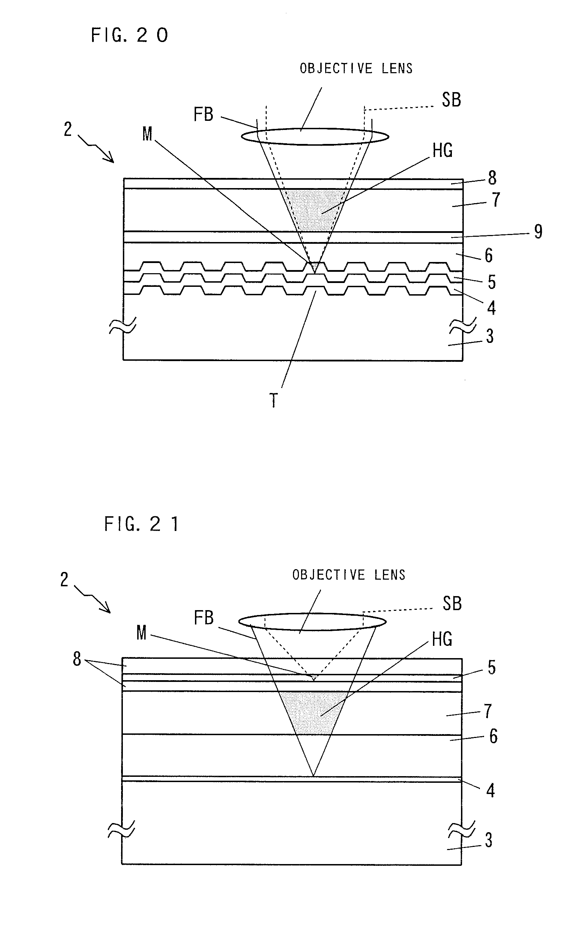

As shown in Fig. 20, the hologram record carrier 2 includes a reflective layer 4, a two-dimensional recording layer 5, a separation layer 6, a polarizing function layer 9, a holographic recording layer 7, and a protective layer 8 that are laminated on a substrate 3 from an opposite side of a light irradiation side. The polarizing function layer 9 such as a 1/4 wavelength plate or a PBS film is formed between the holographic recording layer 7 and the two-dimensional recording layer 5. Reference light is separated from an irradiation detecting optical path by selecting a polarization direction of the reference light using the polarizing function layer 9 without providing a 1/4 wavelength plat on the hologram apparatus side, so that the reference light can be prevented from entering in the photo detector, the sensors, and the like.

### (10) Another Hologram Record carrier Structure

As shown in Fig. 21, the hologram record carrier 2 includes a reflective layer 4, a separation layer 6, a holographic recording layer 7, a two-dimensional recording layer 5, and a protective layer 8 that are laminated on a substrate 3 from an opposite side of a light irradiation side. Thus, the two-dimensional recording layer 5 can be disposed on the objective lens side. In the embodiment, a bifocal lens is used as the objective lens. In the embodiment, it is preferable that material with high optical transparency regarding the wavelength of the first light beam FB is used for the two-dimensional recording layer 5.

Since various information items can be written using the servo beam SB in this manner, for example, a final recorded point of a hologram can be detected by the servo beam SB so that rewriting is made easy.

When a hologram is recorded, address information can be written, so that it is unnecessary to provide an address pit in advance.

Since information where content of a hologram is thumb nailed can be written, confirmation of the content can be conducted using a servo beam SB. In addition, confirmation of the content can be conducted using a simple reading apparatus. A reading apparatus similar to an existing optical disk drive can be utilized.

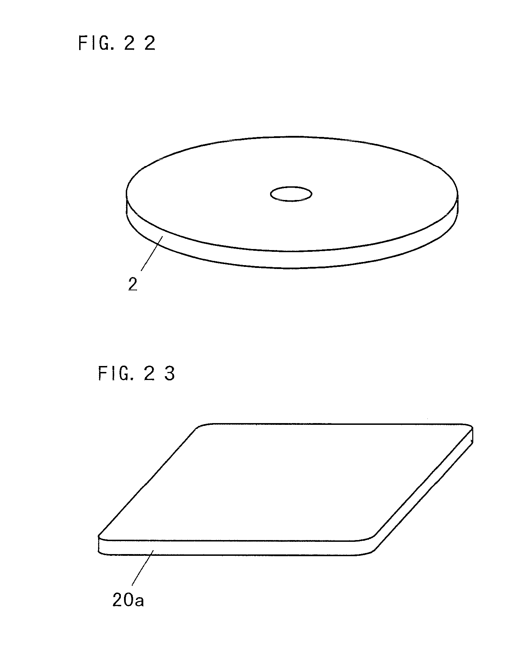

Further, in the embodiment, the example where the hologram record carrier disk 2 such as shown in Fig. 22 is used as the recording medium has been explained, but the shape of the hologram record carrier is not limited to the disk. For example, the recording medium may be a hologram record carrier of an optical card 20a formed from plastic or the like in a rectangular parallel flat plate shape such as shown in Fig. 23. In such an optical card, tracks may be formed in a spiral shape, in a spiral arc shape, or concentrically regarding, for example, a gravity center of the substrate, or a plurality of tracks may be disposed on the substrate parallel side by side.

Furthermore, in the embodiment, the case that recording of a hologram, recording of a mark, and servo control of a light beam are performed using the first beam FB and the servo beam SB (the second beam) whose wavelengths are different from each other from the first and second laser light sources LD1 and LD2, but the first and second laser light sources LD1 and LD2 that emit laser beams with the same wavelength may be used. In this case, for example, while servo control is performed with suppression of light intensity of the servo beam SB to a level where hologram recording does not occur, the first beam FB is turned ON only in a time band requiring hologram recording, or control of recordings on the holographic recording layer and the two-dimensional recording layer can be achieved by raising the light intensity to a predetermined recording level.

## Claims

1. A hologram record carrier having a substrate and a reflective layer, wherein recording or reproducing of information is performed by light irradiation, **characterized by** comprising:
a holographic recording layer that reserves an optical interference pattern comprising components of coherent reference light and signal light as a diffractive grating therein; and
a two-dimensional recording layer that is laminated in a film thickness direction of the holographic recording layer and whose physical property changes in response to light intensity.

2. The hologram record carrier according to claim 1, wherein the optical interference pattern is produced by a first light beam so that a hologram is recorded, and the two-dimensional recording layer senses a second light beam so that a mark is recorded according to change of the physical property.

3. The hologram record carrier according to claim 2, wherein the holographic recording layer has a sensitivity to a wavelength of the first light beam higher than that to a wavelength of the second light beam, and the two-dimensional recording layer is a phase-change film, a pigmented coat, or a magneto-optical recording film where a sensitivity to a wavelength of the second light beam is set to be higher than a sensitivity to a wavelength of the first light beam.

4. The hologram record carrier according to any one of claims 1 to 3, wherein the two-dimensional recording layer is disposed between the holographic recording layer and the reflective layer.

5. The hologram record carrier according to any one of claims 1 to 4, wherein the two-dimensional recording layer is dispose on a side of a light irradiation face of the holographic recording layer.

6. The hologram record carrier according to any one of claims 1 to 5, wherein an end mark indicating an end of the hologram or a group of the holograms recorded on the holographic recording layer is recorded at a portion of the two-dimensional recording layer laminated on a portion of the holographic recording layer recorded with the hologram or the group of the holograms.

7. The hologram record carrier according to any one of claims 1 to 5, wherein an address mark indicating an address of the hologram or a group of the holograms recorded on the holographic recording layer is recorded at a portion of the two-dimensional recording layer laminated on a portion of the holographic recording layer recorded with the hologram or the group of the holograms.

8. The hologram record carrier according to any one of claims 1 to 5, wherein a relational mark indicating information relating to the hologram or a group of the holograms recorded on the holographic recording layer is recorded at a portion of the two-dimensional recording layer laminated on a portion of the holographic recording layer recorded with the hologram or the group of the holograms.

9. The hologram record carrier according to any one of claims 1 to 8, wherein the reflective layer has tracks extending such that they separate from each other without crossing one another for tracking a spot of the light beam that passes from the objective lens through the holographic recording layer and the two-dimensional recording layer to be focused.

10. The hologram record carrier according to any one of claims 1 to 9, wherein the tracks are formed spirally, in a spiral arc shape, or concentrically.

11. The hologram record carrier according to any one of claims 1 to 10, wherein the tracks are formed in parallel.

12. A hologram apparatus of a hologram record carrier having a substrate, a reflective layer, a holographic recording layer that reserves an optical interference pattern comprising components of coherent reference light and signal light as a diffractive grating therein, and a two-dimensional recording layer that is laminated in a film thickness direction of the holographic recording layer and whose physical property changes in response to light intensity, where recording or reproducing information, of a diffractive grating is performed by light irradiation, **characterized by** comprising:
servo control for causing a light beam to track movement of the hologram record carrier is performed by focusing the light beam on the two-dimensional recording layer to detect returning light of the light beam, and recording or reproducing of a mark is performed on the two-dimensional recording layer by the light beam.

13. The hologram apparatus according to claim 12, further comprising first and second light source, first and second drive circuits that supply data to be recorded on the holographic recording layer and the two-dimensional recording layer to the first and second light sources, respectively, and an optical system including an objective lens that irradiates the light beams from the first and second light sources on the hologram record carrier approximately coaxially and supplies returning light from the hologram record carrier to a corresponding detecting unit, wherein the optical interference pattern is produced by a light beam from the first light source so that a hologram is recorded, and the two-dimensional recording layer senses a light beam from the second light source so that a mark is recorded according to change of the physical property.

14. The hologram apparatus according to claim 13, wherein the optical system includes a spatial light modulator that produces signal light by modulating a light beam from the first light source as reference light in response to record information spatially, and an optical system for merging the reference light and the signal light approximately coaxially is provided.

15. The hologram apparatus according to any one of claims 12 to 14, wherein an end mark indicating an end of the hologram or a group of the holograms to be recorded on the holographic recording layer is recorded at a portion of the two-dimensional recording layer laminated on a portion of the holographic recording layer recorded with the hologram or the group of the holograms as the mark.

16. The hologram apparatus according to any one of claims 12 to 14, wherein an address mark indicating an address of the hologram or a group of the holograms to be recorded on the holographic recording layer is recorded at a portion of the two-dimensional recording layer laminated on a portion of the holographic recording layer recorded with the hologram or the group of the holograms as the mark.

17. The hologram apparatus according to any one of claims 12 to 14, wherein a relational mark indicating information relating to the hologram or a group of the holograms to be recorded on the holographic recording layer is recorded at a portion of the two-dimensional recording layer laminated on a portion of the holographic recording layer recorded with the hologram or the group of the holograms as the mark.

18. A recording method of a hologram record carrier having a substrate, a reflective layer, a holographic recording layer that reserves an optical interference pattern comprising components of coherent reference light and signal light as a diffractive grating therein, and a two-dimensional recording layer that is laminated in a film thickness direction of the holographic recording layer and whose physical property changes in response to light intensity, where recording of information is performed by light irradiation, **characterized by** comprising:
servo control for causing a light beam to track movement of the hologram record carrier is performed by focusing the light beam on the two-dimensional recording layer to detect returning light of the light beam, and recording of a mark is performed on the two-dimensional recording layer by the light beam.

19. The recording method according to claim 18, wherein the light beam includes first and second light beams irradiated on the hologram record carrier approximately coaxially, and the light interference pattern is produced by the first light beam, and the two-dimensional recording layer senses the second light beam.

20. The recording method according to claim 19, wherein the first light beam is produced by producing signal light by a spatial light modulator that modulates reference light from the first light source spatially according to record information and merging the reference light and the signal light approximately coaxially.

21. The recording method according to any one of claims 18 to 20, wherein an end mark indicating an end of the hologram or a group of the holograms to be recorded on the holographic recording layer is recorded at a portion of the two-dimensional recording layer laminated on a portion of the holographic recording layer recorded with the hologram or the group of the holograms as the mark.

22. The recording method according to any one of claims 18 to 20, wherein an address mark indicating an address of the hologram or a group of the holograms to be recorded on the holographic recording layer is recorded at a portion of the two-dimensional recording layer laminated on a portion of the holographic recording layer recorded with the hologram or the group of the holograms as the mark.

23. The recording method according to any one of claims 18 to 20, wherein a relational mark indicating information relating to the hologram or a group of the holograms to be recorded on the holographic recording layer is recorded at a portion of the two-dimensional recording layer laminated on a portion of the holographic recording layer recorded with the hologram or the group of the holograms as the mark.

24. A reproducing method of a hologram record carrier that comprises a substrate, a reflective layer, a holographic recording layer that reserves an optical interference pattern comprising components of coherent reference light and signal light as a diffractive grating therein, and a two-dimensional recording layer that is laminated in a film thickness direction of the holographic recording layer and whose physical property changes in response to light intensity, where mark has been recorded on the two-dimensional recording layer by light irradiation, wherein
servo control for causing a light beam to track movement of the hologram record carrier is performed by focusing the light beam on the two-dimensional recording layer to detect returning light of the light beam, and information is reproduced from the mark of the two-dimensional recording layer by the light beam.

25. The reproducing method according to claim 24, wherein the light beam includes first and second light beams irradiated on the hologram record carrier approximately coaxially, information from the light interference pattern is reproduced by the first light beam, and the two-dimensional recording layer senses the second light beam so that information from the two-dimensional recording layer is reproduced by the second light beam.
